(19) **Europäisches Patentamt**
**European Patent Office**
**Office européen des brevets**

(11) **EP 2 844 685 B1**

(12) **EUROPEAN PATENT SPECIFICATION**

(45) Date of publication and mention of the grant of the patent:
**22.06.2016 Bulletin 2016/25**

(51) Int Cl.:
**C08G 63/42** (2006.01)   **C08G 63/60** (2006.01)
**C08G 63/66** (2006.01)   **C08L 67/04** (2006.01)

(21) Application number: **13727998.0**

(86) International application number:
**PCT/IB2013/053302**

(22) Date of filing: **26.04.2013**

(87) International publication number:
**WO 2013/164743 (07.11.2013 Gazette 2013/45)**

(54) **COPOLYMERS BASED ON REACTIVE POLYESTERS AND PLASTICISERS FOR THE MANUFACTURE OF TRANSPARENT, BIODEGRADABLE PACKAGING FILM**

COPOLYMERE AUF BASIS VON REAKTIVEN POLYESTERN UND WEICHMACHERN ZUR HERSTELLUNG EINER TRANSPARENTEN, BIOLOGISCH ABBAUBAREN VERPACKUNGSFOLIE

COPOLYMÈRES À BASE DE POLYESTERS RÉACTIFS ET DE PLASTIFIANTS POUR LA FABRICATION D'UN FILM D'EMBALLAGE TRANSPARENT, BIODÉGRADABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.05.2012 IT MI20120737**

(43) Date of publication of application:
**11.03.2015 Bulletin 2015/11**

(73) Proprietor: **UNIVERSITA' DI PISA**
**56126 Pisa (IT)**

(72) Inventors:
• **LAZZERI, Andrea**
  **I-56126 Pisa (IT)**

• **PHUONG, Thanh Vu**
  **I-56126 Pisa (IT)**
• **CINELLI, Patrizia**
  **I-50144 Firenze (IT)**

(74) Representative: **Bianchetti Bracco Minoja S.r.l.**
**Via Plinio, 63**
**20129 Milano (IT)**

(56) References cited:
**WO-A1-2006/074815     WO-A1-2011/128064**

• **DATABASE WPI Week 200444 Thomson Scientific, London, GB; AN 2004-468305 XP002692320, & WO 2004/048471 A1 (DAICEL CHEM IND LTD) 10 June 2004 (2004-06-10)**

EP 2 844 685 B1

## Description

The present invention relates to novel copolymers consisting of polylactic acid, organic plasticisers with epoxy functions and biodegradable elastomeric polyesters, processes for the preparation thereof, and their uses.

## Prior art

Increasing concern about the environmental impact and sustainability of traditional plastics has led to the development of new materials deriving from renewable sources, in particular for use in the manufacture of plastic carrier bags (also known as "shoppers"). Polymers deriving from agricultural sources, such as polylactic acid (PLA) and its copolymers, are now very important in this context. Currently, one of the processes used in the production of PLA is based on corn starch. Numerous biodegradable products based on PLA and polyesters are present on the market, but none of them possesses optical characteristics (transparency) and mechanical characteristics comparable with traditional plastics. Despite its undoubted advantages compared with traditional plastics, PLA is characterised by a glass transition temperature (Tg) around 60°C, which makes the material too rigid for applications such as packaging film.

The known techniques for rendering polymers such as PLA flexible are:

- copolymerisation,
- mixing with elastomeric polymers,
- adding a plasticiser.

Although these techniques generally improve the flexibility of polylactic acid, there are a number of problems associated with their use (Hongzhi L. et al., Journal of Polymer Science Part B: Polymer Physics 2011, 49, 1051-1083).

The copolymerisation technique allows the production of partly branched biodegradable poly (1-lactide)-co-poly (epsilon-caprolactone) films (Broström J. et al., Biomacromolecules 2004, 5,1124-34). However, this copolymerisation technique requires the use of very expensive equipment, with a significant impact on the final cost of the product.

A variation on this technique is copolymerisation using reactive extrusion. For example, it is possible to graft maleic anhydride onto the main chain of ethylene-octene copolymers by reactive extrusion in a co-rotating twin-screw extruder (K. Premphet et al., Polymer Engineering and Science 2001, 41, 1978-1986). This technology allows a considerable quantity of copolymers to be produced cheaply because there is no need for expensive dedicated equipment; traditional equipment can be used, simply by modifying some of the process parameters.

Mixing of elastomeric polymers allows the production of materials with the properties required to produce flexible films, but the products currently available on the market contain large amounts of elastomeric aliphatic-aromatic copolyesters like poly (butylene adipate-co-terephthalate) (PBAT), such as Ecoflex® made by BASF, Eastar Bio® by Eastman Chemical, Biomax® by Dupont and Origo-Bi® by Novamont, or poly (alkylene succinates) like poly (butylene succinate) (PBS), such as Bionolle® made by Showa Denka. For example, patent US5,883,199 discloses mixtures of PLA and Bionolle® polybutylene succinate. This type of polyester is biodegradable, but originates from non-renewable sources and has a very high cost. The products currently on the market, as well as only containing a minimal proportion of raw materials originating from renewable sources, are opaque because these elastomers have limited compatibility with PLA due to the substantial difference in the chemical structures of the two components. This generates the formation of a two-phase microstructure, with a continuous phase (normally consisting mainly of elastomeric polyester) and a dispersed phase (usually based on PLA) in the form of approximately spherical particles with a diameter of a few microns. Although the adhesion between said two phases is generally good, such a microstructure does not allow the passage of visible light, and the material is opaque (Lazzeri A. et al., Macromolecular Symposia, 301 (2011) 82-89; Coltelli M.B., Polymer Degradation and Stability 96 (2011) 982-990).

In order to obtain flexible film, PLA can be plasticised with suitable plasticisers. The main problem with this technique is that plasticisers tend to migrate to the surface, causing alterations in the properties of the film. Moreover, when they migrate to the surface they come into contact with the environment, especially with foodstuffs in the case of food wrapping. The choice of plasticisers is therefore limited by the need to use non-toxic substances approved for contact with food and by their miscibility with PLA, so as to allow the formation of a homogenous mixture. These plasticisers must also have low migration rates (Hongzhi L. et al., Journal of Polymer Science Part B: Polymer Physics 2011, 49, 1051-1083). To reduce the tendency to migration, PEG and tributyl citrate (TBC) can be grafted onto PLA by reactive extrusion (Hassouna F. et al., European Polymer Journal, 47, 2011, 2134-2144; Hassouna F. et al. European Polymer Journal, 48 (2012) 404-415).

Many attempts have been made in recent years to develop the use of glycerol and sorbitol as a source for the production of chemical products and materials with high added value. Glycerol and sorbitol are plentiful, cheap aliphatic polyols derived from annually renewable agricultural raw materials which can be produced from vegetable oil and corn starch respectively. Recently, glycerol has attracted a great deal of attention because it is the main by-product of biodiesel production following transesterification of oils (about 10% of the product). The excess glycerin from the production of biodiesel and other basic oleochemical products provides a good opportunity to find new applications for glycerol. Polypropylene glycol can also be produced from glycerol and sorbitol obtained from natural sources.

Epoxy resins based on vegetable glycerol, such as glycerol polyglycidyl ether (GPGE) and polyglycerol polyglycidyl ether (PGPE) are available on an industrial scale at low cost. Said epoxy resins have been used in the textile and paper industries and as reactive diluents and the like.

In recent studies (Song X., MSc thesis, University of Massachusetts Lowell, 1997; McCarthy S. et al., Annu. Tech. Conf. - Soc. Plast. Eng. (2001), 59th (Vol. 3), 2546-2549; Song X. et al., Journal of Applied Medical Polymers, 2002, 6(2), 64-69) it has been demonstrated that the addition of low-molecular-weight epoxy compounds such as polypropylene glycol diglycidyl ether (PPG-DGE) and epoxy soybean oil (ESO) during mixing of the molten product improves heat stability and increases the flexibility of films based on partly branched copolymers based on poly(L-lactide)-*co*-poly($\varepsilon$-caprolactone), perhaps due to reactions between the epoxy groups and the carboxyl and hydroxyl terminus of the copolymer, initially present or generated during the degradation process, which give rise to ester and ether bonds.

Epoxy soybean oil (ESO) has been used to plasticise PLA (US5359026; US2009/253871), but its efficacy as a plasticiser is rather low (Ali, F. et al., Polym. Bull., 2008, 62, 91-98). For example, a PLA containing 10 phr of ESO presented 38% strain at break, while the yield point fell from 60 MPA for pure PLA to 26 MPA for plasticised PLA.

Patent US2005/136259 discloses tiles based on formulations of PLA modified with plasticisers, such as ESO, phthalates, citrates and others, and compatibilisers such as maleinised polyolefin and other products mixed by extrusion. Compatibility is also improved by the use of peroxides. Said formulations do not have a transparent appearance, and no data regarding their biodegradability or the toxicity of the products of biodegradation are reported.

The preparation of a transparent ductile blend of poly(butyl acrylate) (PBA) and PLA, obtained by mixing in the molten mass, was only reported in a recent publication (Meng B. et al., European Polymer Journal, 48 (2012) 127-135). However, PBA is only partly miscible with PLA, and phase separation takes place at PBA contents exceeding 11%, which leads to a progressive reduction in transparency as the PBA concentration increases. As PBA is not biodegradable, the biodegradability of these mixtures is progressively reduced as the percentage of PBA increases.

WO 2011/128064 A1 discloses a process for manufacturing a block copolymer, said process comprising the step of reactive melt-blending a mixture of polylactic acid, poly(butylene adipate-co-terephthalate), and ethylene-methyl acrylate-glycidyl acrylate copolymer.

WO 2006/074815 A1 describes a process comprising the step of reactive melt-blending a mixture of a biodegradable polyester such as polylactic acid, a biodegradable elastomeric copolyester, and a glycidyl group containing fatty acid ester

The efficiency of reactive plasticisers can be evaluated by measuring the tensile strength and ultimate elongation of film products, at different plasticiser concentrations and under different preparation conditions, and reducing the glass transition temperature (Tg) of the mixtures. Differential scanning calorimetry (DSC) and dynamic mechanical thermal analysis (DMTA) can be used to confirm this reduction.

The present invention provides a novel copolymer, with a higher content from renewable sources and a lower cost, which is also transparent and presents optimum mechanical characteristics for the production of packaging film and shoppers, in particular increased mechanical strength, good deformability and a good elastic return, accompanied by a soft feel.

## SUMMARY OF THE INVENTION

The inventors, using a reactive blending process, have surprisingly obtained novel transparent copolymers characterised by a polylactic acid block structure (PLA) covalently bonded to segments of functionalised plasticisers and elastomeric copolyesters which maintain optimum mechanical characteristics at temperatures lower than 40°C, leading to a significant improvement in flexibility in the above-mentioned temperature range. The plasticiser molecules are permanently incorporated (internal plasticiser) in polylactic acid by means of a covalent bond that forms during the copolymerisation process. This prevents the plasticiser from migrating to the surface of the film, in particular in the presence of water or polar solvents, and produces better compatibilisation with the elastomeric polyesters added to guarantee good elastic characteristics in the finished product. In particular, the best results were obtained with plasticisers modified with epoxy functional groups which react, even at low temperatures, during hot mixing with the terminal carboxyl and hydroxyl groups characteristic of polyesters. The choice of these plasticisers is based on the principle that the epoxy group is able to react with the terminal functional acid group of PLA. The extrusion thus becomes reactive extrusion. A number of advantages are obtained in this way:

* The reaction between the epoxy group and the acid group is rapid, and does not generate by-products. Moreover, it does not give rise to a bond readily subject to hydrolysis.
* The acid group of PLA, which is responsible for the hydrolytic breakdown of the biopolymer, is blocked. During the reactive extrusion tests there were no degradation phenomena, although the polymer combined with the reactive plasticisers was not dried before film-forming, as is the common practice in the field of polylactic acid extrusion.

* As the reactive plasticisers in question can have two or more epoxy groups per molecule, a PLA-GPGE-PLA or PLA-DGEPPG-PLA block copolymer can be formed which gives flexibility to the polylactic acid chain. Glycerol triglycidyl ether can bind up to three different molecules of PLA.

* In the presence of other elastomeric polyesters like Ecoflex® and Bionolle®, the epoxy functionality can react with the carbonyl terminal to form a stable bond. In this way, GPGE and DGEPPG can act as compatibilisers at molecular level between said polyesters and PLA. The films produced with GPGE (or DGEPPG), PLA and Ecoflex are transparent, whereas those based on PLA and Ecoflex alone are opaque.

* The epoxy group is also reactive towards the hydroxyl groups present on other natural polymers such as cellulose and lignin, or other polymers of artificial origin; this allows the production of films filled with cellulose fibres or other fibres or fillers.

* Glycerol can be manufactured by a natural process through hydrolysis of animal and vegetable fats; it is also an important by-product of biodiesel production, which has an adverse impact on the profitability of the process. Its use in PLA film provides an important outlet for this by-product in terms of total volume. The same can also be said of polypropylene glycol, which can be produced from glycerin, a by-product of biodiesel production. By partly replacing Ecoflex or Bionolle with GPGE or DGEPPG, the dependence of PLA-based film on petroleum can be reduced.

* The adherence characteristics of GPGE and DGEPPG improve the printability and sealability of these films.

* Both glycerol and PPG are easily biodegradable, and are not toxic to humans or the environment. Their addition improves the compostability and biodegradability characteristics of these materials, potentially helping to solve the problems of accumulation of traditional polymer materials, deriving from depleted products originating from said application sectors.

The novel copolymers were prepared by a process of reactive blending in the molten state, starting with mixtures of:

- polylactic acid (PLA).
- an aliphatic or cycloaliphatic di- or poly-glycidyl ether such as glycerol polyglycidyl ether (GPGE) and polypropylene glycol diglycidyl ether (PPG-DGE), or an epoxy oil such as epoxy soybean oil (ESO) and epoxy linseed oil (ELO).

- elastomeric copolyesters like polybutylene-*co*-adipate-*co*-terephthalate (PBAT, products marketed under the names Ecoflex® by BASF, EastStar Bio® by Eastman Chemical, Origo-Bi® by Novamont, Biomax® by Dupont and Sky Green® SG300 by SK Chemical Co.), or polybutylene succinate (PBS, Sky Green® SG100 by SK Chemical Co.), or polybutylene-co-adipate-co-succinate (PBAS, Bionolle® by Showa Denka, and Sky Green® SG200 by SK Chemical Co.).
- the additives necessary for processing the blown thermoplastic film, such as slip agents, antistatic agents and antiblocking agents like erucic amide (erucamide), oleic amide (oleamide) and stearic amide (stearamide), and talc, natural or synthetic amorphous silica, calcium carbonate, zeolites and waxes.

The reactive plasticiser (such as GPGE or PPG-DGE) can be premixed with the other ingredients by dry-blending. Alternatively, it can be introduced through a peristaltic pump directly during extrusion processing. After extrusion, the material is granulated by the techniques commonly used in the compounding industry, and then transformed to film by the well-known extrusion blowing techniques.

The process produces novel materials having the structure of block copolymers, the structure and molecular masses of which are advantageously modulatable by adjusting the parameters of the mixing process.

### Detailed description of figures

Figure 1 - Stress-strain curves of mixtures. The graph shows that the addition of reactive plasticiser allows the production of film with high ultimate elongation and good mechanical characteristics.

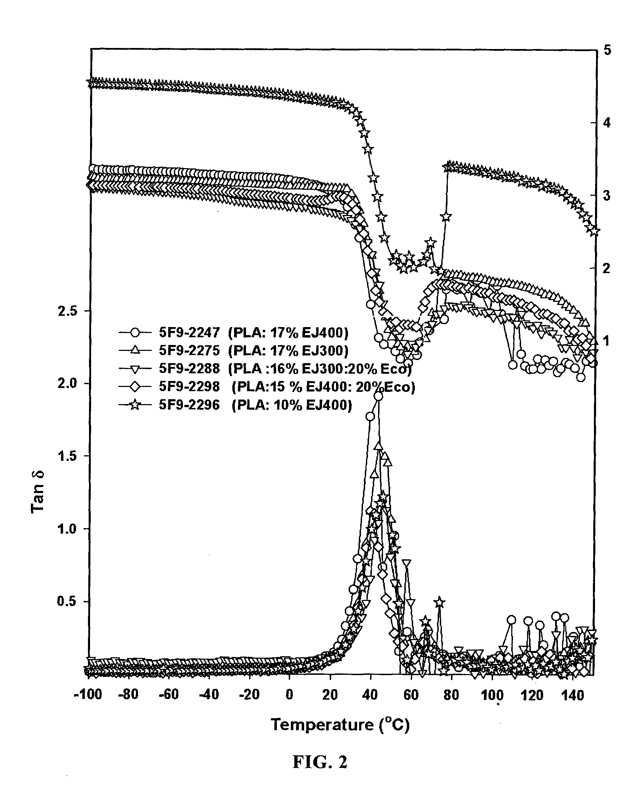

Figure 2 - Dynamic mechanical analysis of mixtures. A single peak of tan $\delta$, corresponding to the glass transition temperature of the mixtures, can be seen in this graph. This is obviously associated with the formation of a copolymer between PLA and the reactive plasticiser. Note the absence of a tan $\delta$ peak corresponding to the glass transition of Ecoflex rubber. This is explained by the fact that this elastomeric polyester also becomes a single material having a copolymer structure. In addition to the reaction between the functional epoxy group of the reactive plasticiser and the terminal carboxyl group present on PLA and Ecoflex, transesterification reactions are possible, as are concomitant hydrolytic reactions with formation of new carboxyl groups still able to react with other functional epoxy groups present in the mixture.

Figure 3 - DSC analysis of a sample of 5F9-2298. An endothermic peak corresponding to the secondary crystallisation of PLA, and an exothermic peak relating to the fusion of the crystals, can be observed. The two areas are roughly equivalent, indicating that the film obtained by blown extrusion is substantially amorphous.

Figure 4 - FTIR spectroscopic analysis. The graphs show the disappearance of the peak at 915 cm$^{-1}$ characteristic of the epoxy group.

Figure 5 - Scanning electron microscopy (SEM) analysis of a sample of 5F9-2298. From the morphological standpoint, all the copolymers prepared present a monophasic structure.

Figure 6 - Visual trend of biodegradation of a sample of (5F9-2298).

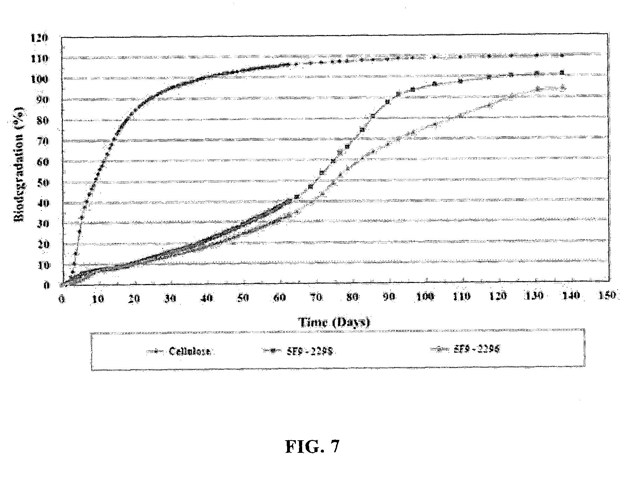

Figure 7 - Results of the aerobic test in compost (ISO 14855) of samples of 5F9 - 2298 and 5F9 - 2296 by comparison with cellulose.

Figure 8 - EC50 values of Vibrio fischeri for film based on PLA and the corresponding toxic units (TU). The EC50 concentrations presented relate to the film concentrations presented in water during the release test, before the pieces of film were removed and the aqueous phase was tested for toxicity. TU values <2 are considered non-toxic.

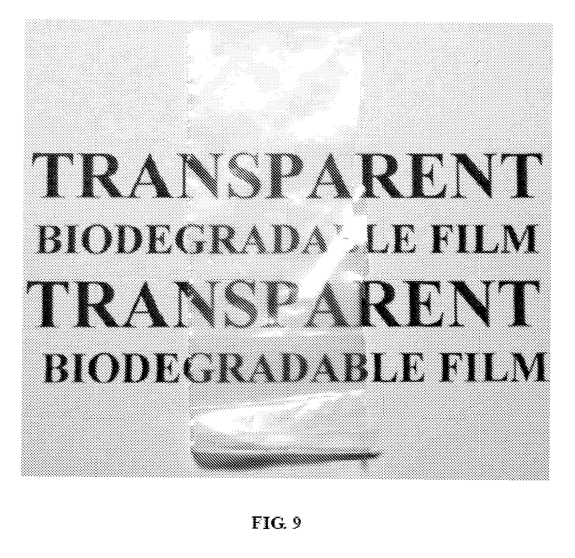

Figure 9 - Photograph of a 15 μm thick sample of 5F9-2298 which shows the high degree of transparency of the film.

**Detailed description of the invention**

The present invention relates to block copolymers wherein the blocks consist of:

A) polylactic acid (PLA)
B) aliphatic or cycloaliphatic glycidyl ether (GE)
C) biodegradable elastomeric copolyester

wherein:

- the percentage of polylactic acid ranges from 40% to 90%;
- the percentage of glycidyl ether ranges from 5% to 60%;
- the biodegradable elastomeric copolyester component ranges from 5% to 40%,

wherein the percentages are by weight on the total weight of copolymer.

Blocks A, B and C are covalently bonded via ester bonds obtained by reacting the epoxy groups of aliphatic or cycloaliphatic glycidyl ether (GE) with the reactive carboxyl group of polylactic acid (PLA) or the reactive carboxyl group of biodegradable elastomeric copolyester.

Preferably, the percentage of polylactic acid ranges from 70% to 80%, the percentage of aliphatic or cycloaliphatic glycidyl ether ranges from 5 to 15%, and the percentage of biodegradable elastomeric copolyester ranges from 10% to 20% by weight on the total weight of the mixture.

Preferably, the percentage of polylactic acid is substantially 75%, the percentage of an aliphatic glycidyl ether is substantially 10%, and the percentage of biodegradable elastomeric copolyester is substantially 15% by weight on the total weight of the mixture.

The polylactic acid is selected from poly L-lactic acid, poly D-lactic acid or mixtures thereof. The weight-average molecular weight of polylactic acid (measured by gel permeation chromatography) can be selected from, but is not limited to, 15,000 and 1,000,000, preferably between 100,000 and 350,000, and more preferably between 150,000 and 250,000. There is no special limitation on the purity of polylactic acid; polylactic acid preferably comprises over 80% by weight of poly L-lactic and/or poly D-lactic acid; more preferably polylactic acid comprises over 90% by weight of poly L-lactic and/or poly D-lactic acid. Recycled polylactic acid can also be used.

Glycidyl ether consists of "m" monomer units where "m" is an integer between 20 and 300.

Glycidyl ether is preferably selected from the group consisting of glycerol polyglycidyl ether, polypropylene glycol diglycidyl ether, trimethylol propane triglycidyl ether, sorbitol polyglycidyl ether, polyglycerol polyglycidyl ether, pentaerythritol polyglycidyl ether, diglycerol polyglycidyl ether, trimethylol propane polyglycidyl ether, polyethylene glycol diglycidyl ether, resorcinol diglycidyl ether, p-hydroxybenzoic acid glycidyl ether, neopentyl glycol diglycidyl ether, 1,6-hexanediol diglycidyl ether, bisphenol A diglycidyl ether, hydroquinone diglycidyl ether, bisphenol S diglycidyl ether, 1,4-butanediol diglycidyl ether, o-cresyl glycidyl ether, polyglycerol-3-glycidyl ether, 1,4-cyclohexanedimethanol diglycidyl ether, 2-ethylhexylglycidyl ether, 1,6-hexanediol diglycidyl ether, glycidyl ether of a mixture of C11-C15 alcohols (C12-C14-glycidyl ether), polyoxypropylene glycol diglycidyl ether, poly(tetramethyleneoxido) diglycidyl ether, hydrogenated bisphenol A diglycidyl ether, ethylene glycol diglycidyl ether, diethylene glycol diglycidyl ether, polyethylene glycol diglycidyl ether, propylene glycol diglycidyl ether, polybutadiene diglycidyl ether, allyl glycidyl ether, phenyl glycidyl ether, lauryl alcohol ethylene oxide (n=15) glycidyl ether, dibromo phenyl glycidyl ether, isosorbide diglycidyl ether, glycerol propoxylate triglycidyl ether, epoxy soybean oil (ESO), epoxy linseed oil (ELO), hydrogenated bisphenol A diglycidyl ether and oligomers thereof, or mixtures of said substances.

The biodegradable elastomeric copolyester is preferably selected from the group consisting of polybutylene-co-adipate-co-terephthalate (PBAT, Ecoflex® made by BASF, or Eastar Bio® by Eastman Chemical, or Origo-Bi® by Novamont, or Biomax® by Dupont or Sky Green® SG300 by SK Chemical Co.), polybutylene succinate (PBS, Sky Green® SG100 by SK Chemical Co.), and polybutylene-co-adipate-co-succinate (PBAS, Bionolle® made by Showa Denka, and Sky Green® SG200 by SK Chemical Co.).

The copolymers according to the invention are obtained by a process of reactive blending in the molten state, starting from mixtures comprising:

- 40%-90% polylactic acid (PLA),
- 5% and 60% aliphatic glycidyl ether (GE) and
- 5%-40% of biodegradable elastomeric copolyester

of the lengths previously defined.

The polymers PLA, GE and biodegradable elastomeric copolyester are available on the market or can be synthesised by synthesis methods known to the skilled person.

Reactive blending of the three polymers could be performed by the effect of temperature, or by using specific catalysts, such as the transesterification catalysts known to the skilled person. Usable catalysts include, for example, tetrabutylammonium tetraphenylborate (TBATPB), titanium tetrabutoxide $Ti(OBu)_4$, dibutyl tin dilaurate $Sn(Bu)_2(Lau)_2$, antimony oxide $Sb_2O_3$, and stannous chloride dihydrate ($SnCl_2 \cdot 2H_2O$).

If temperature alone is used, the polymers are mixed at a temperature of at least 160°C for times of under 5 minutes, preferably for times ranging between 1 and 2 minutes.

Mixing is preferably performed at a speed of between 50 and 400 rpm using devices such as continuous twin-screw extruders.

The reaction mixture can also contain the additives required to process the blown thermoplastic film, such as slip agents, antistatic and antiblock agents such as erucic amide (erucamide), oleic amide (oleamide) or stearic amide (stearamide), and talc, natural or synthetic amorphous silica, calcium carbonate, zeolites and waxes.

The copolymers obtainable by the mixing process previously described can be advantageously transformed into film by subsequent processing.

The film can be produced, for example, with a blown-film extrusion unit. The film-forming process will preferably be performed hot, at a temperature of between 180 and 230°C, preferably at a temperature of 200°C.

The copolymers according to the present description are used alone or in combination with other compounds to prepare products such as packaging film for used in the industrial, civil (bin bags), agricultural (agricultural shrinkwrap), clothing (bags with handles, hinges, zips, double-sided adhesive tape, garment bags) and food (sachets, bags and carrier bags) industries. The skilled person could use known methods to manufacture said articles.

The films produced with the copolymers according to the invention are transparent, have a glass transition temperature (Tg) of less than 46°C, ultimate tensile strength of less than 30 MPA, and ultimate elongation greater than 140%.

The experiments and examples reported below are designed to illustrate more clearly the contents of the present description; said examples shall not under any circumstances be deemed to limit the preceding description or the subsequent claims.

**Examples**

Example 1. Copolymer preparation method

10 kg/h of a mixture consisting of the following substances was fed into a co-rotating twin-screw extruder with 25 mm diameter screws and a screw length/diameter ratio of 40: 67.5% by weight of a PLA with an Mw = 200 kDa; 11.4% by weight of EJ400, a polypropylene glycol diglycidyl ether (PPG-DGE) CAS No.:26142-30-3, with EEW = 305 ~ 325 g/eq, 0.7% of erucic amide and 4.1% of Ecoflex AB1 (50% talc dispersed in Ecoflex).

Mixing was carried out at the temperature of 180°C with a rotor speed of 400 rpm, for a residence time of 1 minute. The mixed molten product was cooled in water to solidify it and obtain granules, which were then transformed into film by blown-film extrusion. The product was characterised by mechanical traction tests, infrared spectroscopy (FTIR), differential scanning calorimetry (DSC) and dynamic mechanical thermal analysis (DMTA).

Examples 2-5

The same procedure as described in example 1 was used to prepare the copolymers reported in tables 1-5.

EJ300, a glycerol polyglycidyl ether (GPGE) also known as 1,2,3-propanetriol glycidyl ether or glycerol glycidyl ether, CAS no. 25038-04-4, with epoxy equivalent EEW = 135 ~ 155 g/eq, was used instead of EJ400 in examples 2 and 3. Ecoflex F Blend C1200, a statistical, aromatic-aliphatic, biodegradable copolyester based on monomers of 1,4-butanediol, adipic acid and terephthalic acid, was also used in examples 2, 3 and 5 .

Table 1 - composition of the formulations used in examples 1-5

| Example | Formulation code | PLA (%) | EJ300 (%) | EJ400 (%) | Erucic amide (%) | Ecoflex Batch AB1 (%) | Ecoflex C1200 (%) |
|---|---|---|---|---|---|---|---|
| 1 | 5F9-2274 | 80.2 | | 16.4 | 0.5 | 2.9 | |
| 2 | 5F9-2275 | 76.4 | 15.7 | | 0.5 | 2.8 | 4.6 |
| 3 | 5F9-2288 | 63.3 | 10.3 | | 0.6 | 3 | 22.8 |
| 4 | 5F9-2296 | 82.1 | | 14.5 | 0.5 | 2.9 | |
| 5 | 5F9-2298 | 67.5 | | 11.4 | 0.7 | 4.1 | 16.3 |

Experimental analysis of copolymers

*Analysis methods*

The mechanical characteristics under traction were measured at room temperature, on samples with a "dog's bone" shape (width 6 mm; thickness about 0.05 mm) obtained from film obtained by blown film extrusion according to standard ISO 527. The tests were carried out with a deformation rate of 10 mm/min using a an Instron 4302 universal machine equipped with static extensometer, having a maximum deformation of 1000%. At least five samples were tested for each material.

An Eplexor 1000N instrument made by GABO Testanlagen GMBH was used for the dynamic mechanical thermal analysis (DMTA). The tests were carried out at a frequency of 1 Hz in the temperature range between -100°C and 200°C with a heating rate of 2°C/min. The samples (width 10 mm; thickness about 0.05 mm; usable length 20 mm) were obtained from film obtained by blown-film extrusion.

The thermal characteristics of the film were determined by differential scanning calorimetry (DSC TA Instruments model Q200). The thermal history and processing of the film were analysed and eliminated, and 6 mg of material was subjected to a first scan in the -100°C to 230°C range at the heating rate of 10°C/min (first heating scan), followed by a 3-minute isothermal pause at 230°C. Subsequent cooling in the 230°C to -100°C rage at the cooling rate of 20°C/min enabled all the materials analysed to be thermically standardised. The last scan was performed in the -100°C to 230°C range at the heating rate of 10°C/min (second heating scan). A nitrogen flow of 50 ml/min was maintained in the measuring head; standard samples of indium and sapphire were used to calibrate the calorimeter.

The infra-red qualitative analysis was performed with a Thermo Scientific Nicolet 380 FT-IR spectrophotometer using the transmission technique. A few milligrams of film were finely ground and dispersed in anhydrous potassium bromide powder. Transparent pastilles with a thickness ranging from 0.5 mm to 1 mm were then made.

Biodegradability was determined by the ISO 16929 qualitative disintegration test. In said test, the disintegration of samples of 5F9 - 2296, 5F9 - 2288, 5F9 - 2275 and 5F9 - 2298 was examined for 12 weeks' composting. The samples were placed in slide frames, mixed with organic waste and composted in a 200 1 container.

The aerobic test in compost according to ISO 14855 was carried out on samples 5F9 - 2298 and 5F9 - 2296.

The ecotoxicity of the products of biodegradation of examples 1-5 was also evaluated.

Ecotoxicological evaluation of fresh water percolates was carried out by alternative microbiotest screening using luminescent Vibrio fischeri.

A single-stage leaching test according to EN 12457-4:2002 was used to obtain aqueous extracts from samples of 5F9-2275, 5F9-2288, 5F9-2296 and 5F9-2298. The materials (20 g) were placed in a 250 mL glass bottle to which 200 mL of water was added, resulting in a liquid/solid ratio of 10 L/Kg. All the bottles were stirred at 150 rpm for 24 hours at room temperature. Three replications were performed for each product, and three bottles with deionised water were used as control. After extraction lasting 24 hours, the samples were left to stand for 15 min, the percolate was filtered through a fine nylon fabric, and the aqueous phase was tested for acute toxicity.

The bioluminescent bacterium Vibrio fischeri (Biotox, Aboatox, Finland) was used to measure acute toxicity according to standard ISO 11348-3. The bioluminescence of V. fischeri was measured with a luminometer at 20°C after 30 minutes' exposure of V. fischeri to different concentrations (1:2-1:64) of percolate. The intensity of luminescence after incubation was compared with the intensity of luminescence of the pure bacteria. A reduction in light production was considered to represent an indicator of toxicity. The results were standardised and the EC50 values (the concentration that produces a 50% reduction in luminescence) were calculated. The EC50 values were subsequently converted to toxic units (TU) [De Vetter L.; Depraetere G.; Janssen C.; Stevens C.; Van Acker J. Ann. For. Sci. 65(504) 1-10 (2008)].

$$TU = (1/EC50\ (\%)) \times 100$$

*Analysis of results*

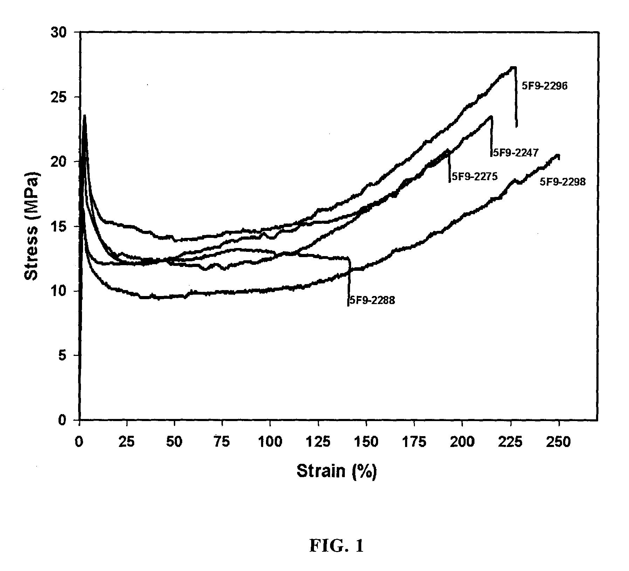

PLA is particularly interesting in view of the dual advantage of being prepared from renewable sources and being biodegradable. However, its intrinsic rigidity and fragility, due to its glass transition temperature, only makes it suitable for a limited range of applications. Replacement of polymers like polyolefins in large-scale applications (such as applications in the agricultural and packaging fields) requires modulation of the properties of PLA-based materials. In particular, mixtures of PLA with poly (butylene adipate di-co-terephthalate) (PBAT) and glycerol polyglycidyl ether (GPGE) and PLA, with poly(butylene adipate-co-terephthalate) and polypropylene glycol diglycidyl ether (PPG-DGE), prepared by the reactive compatibilisation technique, exhibit a definite increase in flexibility and ductility values.
Table 2 shows the compositions of the mixtures with their stress and strain values, and the corresponding stress-strain curves are reported in Figure 1.
PLA has an ultimate tensile strength of about 66 MPA with an ultimate elongation of about 5%; in the mixtures examined, the ultimate tensile strength ranges between 20 and 30 MPA, with ultimate elongation of between 190 and 250%. A reduction in ultimate tensile strength, accompanied by a marked increase in ultimate elongation, indicates a great increase in the toughness of the mixtures due to the formation of the copolymer. This result is also demonstrated by the dynamic mechanical analysis (DMTA) wherein the presence of a single peak in the Tan $\delta$ curve as a function of temperature and its movement towards lower temperatures at the peak temperature of PLA is an indicator of the formation of the copolymer (Figure 2).

Table 2

| Mixture | Ultimate tensile strength (MPa) | Ultimate elongation (%) |
|---------|--------------------------------|-------------------------|
| 5F9 - 2274 | 23.2 | 211 |
| 5F9 - 2275 | 22.7 | 191 |
| 5F9 - 2288 | 22 | 140 |
| 5F9 - 2296 | 27.2 | 227 |
| 5F9 - 2298 | 20.2 | 246 |

The shift of the peak temperature towards temperatures lower than the typical peak of the Tg of PLA also explains the increased toughness demonstrated by the mechanical measurements. In the curves of the modulus of elasticity as a function of temperature (Figure 2), a reduction in the value of the modulus is observed near the glass transition, and subsequently, for temperatures close to 70°C, an increase thereof associated with the cold crystallisation characteristic of PLA. Table 3 shows the Tg values of the mixtures.

Table 3 - Glass transition temperatures of mixtures under test

| Mixture | Tg (°C) | Mixture | Tg (°C) |
|---------|---------|---------|---------|
| 5F9 - 2274 | 43 | 5F9 - 2296 | 45 |
| 5F9 - 2275 | 44 | 5F9 - 2298 | 39 |
| 5F9 - 2288 | 46 |  |  |

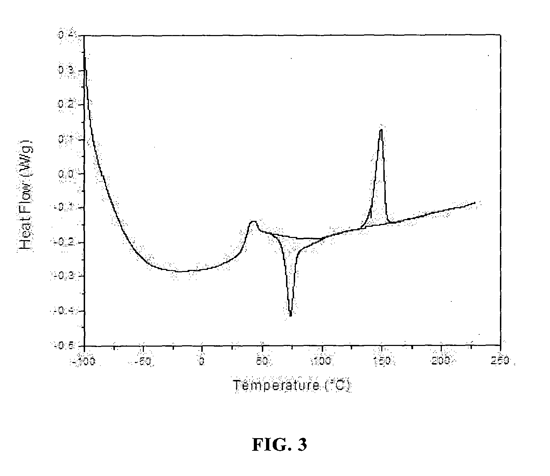

The curves relating to the thermal analysis (Figure 3) carried out on the films show similar patterns, with a reduction near the glass transition temperature (*Tg*) followed by an exothermic peak (cold crystallisation) and an endothermic peak (fusion). Table 4 shows the *Tg, ΔH* fusion values and the *ΔH* crystallisation values for the first heating. The film obtained from mixture 5F9-2298 proved more amorphous (ΔH=1.33J/g), with a lower Tg than the other mixtures (33.09°C). Table 5 shows the values measured during the second heating, which demonstrate that all the Tg's are quite close, apart from material 5F9-2275 (Tg = 22.87°C), while the material with the smallest ΔH was 5F9-2288. These results do not conflict with one another, but are explained by the fact that the results of the first heating include the composition and type of processing (blown film extrusion) of the material.

Table 4 - Thermal parameters during 1 st heating

| Mixture | $Tg$ | $\Delta H_f$ | $\Delta H_c$ | $\Delta H=\Delta H_\phi-\Delta H_\chi$ |
|---|---|---|---|---|
| 5F9 - 2274 | 35.99°C | 11.52 J/g | 8.45 J/g | 3.07 J/g |
| 5F9 - 2275 | 33.72°C | 25.6 J/g | 20.89 J/g | 4.71 J/g |
| 5F9 - 2288 | 39.35°C | 20.76 J/g | 11.37 J/g | 9.39 J/g |
| 5F9 - 2298 | 33.09°C | 21.60 J/g | 20.27 J/g | 1.33 J/g |
| 5F9 - 2296 | 34.04°C | 25.80 J/g | 18.71 J/g | 7.09 J/g |

Table 5 - Thermal parameters during 2nd heating

| Mixture | $Tg$ | $\Delta H_\phi$ | $\Delta H_\chi$ | $\Delta H=\Delta H_\phi-\Delta H_\chi$ |
|---|---|---|---|---|
| 5F9 - 2274 | 30.77°C | 14.29 J/g | 10.40 J/g | 3.89 J/g |
| 5F9 - 2275 | 22.87°C | 10.60 J/g | 6.44 J/g | 4.16 J/g |
| 5F9 - 2288 | 33.48°C | 11.85 J/g | 10.14 J/g | 1.71 J/g |
| 5F9 - 2298 | 33.91°C | 24.18 J/g | 19.68 J/g | 4.5 J/g |
| 5F9 - 2296 | 33.48°C | 30.04 J/g | 18.67 J/g | 11.37 J/g |

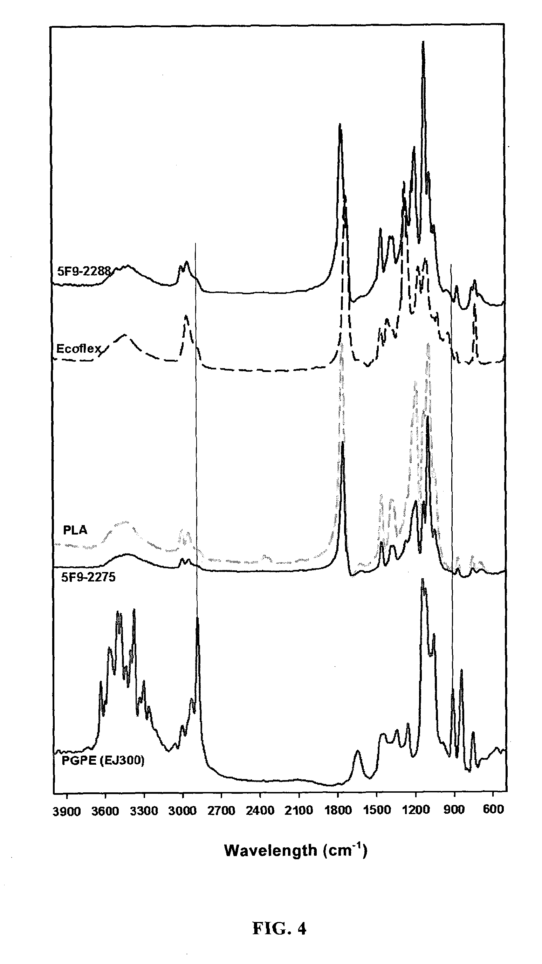

The spectroscopic analysis of the films obtained by blown film extrusion shows that the percentage of unreacted reactive plasticiser (EJ300; EJ400) is below the instrument detection threshold (Figure 4).

Analysis of the results of the various tests as a whole leads to the conclusion that the film obtained from mixture 5F9-2298 by blown film extrusion provides the most promising performance.

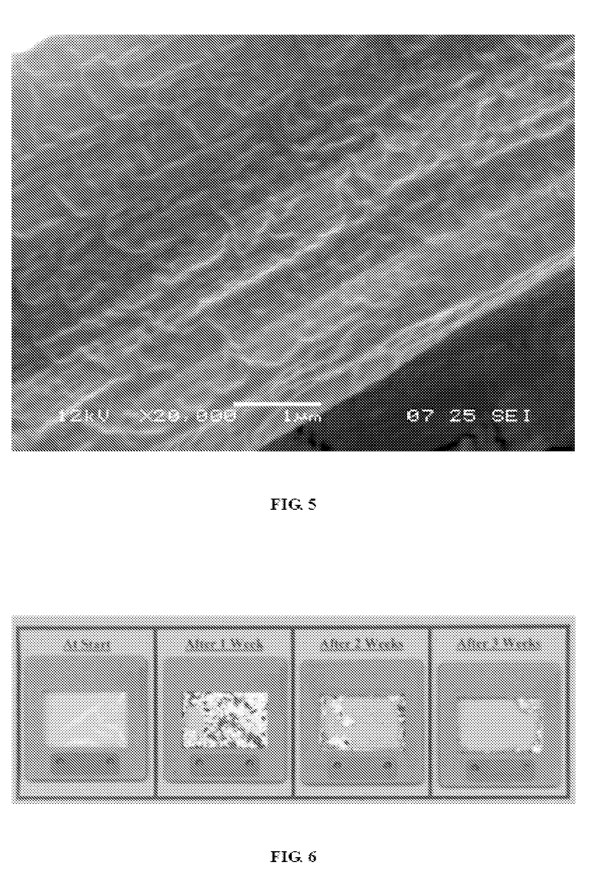

From the morphological standpoint, these materials present a uniform structure typical of monophase systems. A typical morphology exhibited by these materials is illustrated in Figure 5, which shows a micrograph performed under the scanning electron microscope (SEM) on sample 5F9-2298.

As shown by the micrograph in Fig. 5, no particles of dispersed phase are observed, even at high enlargements, and this is correlated with the considerable degree of transparency of these films.

The biodegradability of the films was verified by disintegration test. All the samples disintegrated completely in the 12 weeks specified by standard ISO 16929. Figure 6 shows the development of the disintegration of a sample of 5F9-2298. After 3 weeks, only a shred of film remained in the frame.

The results of the biodegradability test under aerobic conditions in compost, carried out at 58°C for 137 days according to ISO 14855, demonstrate that the biodegradation of 5F9 - 2298 and 5F9 - 2296 proceeded normally, and both samples complied with the biodegradability requirements laid down by the standard.

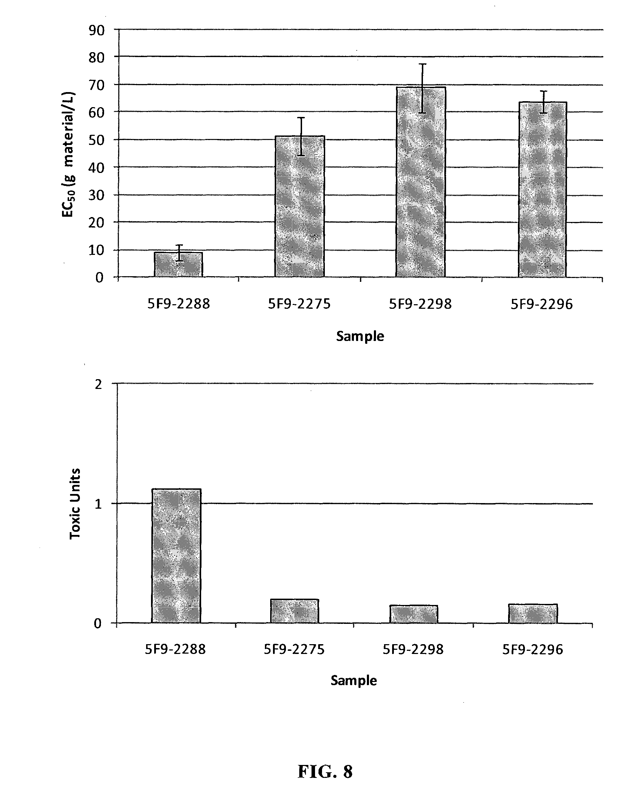

The ecotoxicity results obtained for the four samples tested are shown in Fig. 8. None of the samples analysed presented TU (Toxic Unit) values greater than 2; consequently, no direct ecotoxic effect on aquatic ecosystems is to be expected from these materials. It is particularly important that the substances leached from sample 5FP9-2288 for which higher toxic unit values were measured were characterised by a higher quantity of Ecoflex C1200 in the composition than the other three materials.

In conclusion, the films described in examples 1-5 proved biodegradable, and the products of degradation have no direct toxic effects on aquatic ecosystems.

**Claims**

1.  A block copolymer wherein the blocks consist of:

A) polylactic acid (PLA);
B) aliphatic or cycloaliphatic glycidyl ether (GE);
C) biodegradable elastomeric copolyester;

wherein:

- the percentage of polylactic acid ranges from 40% to 90%;
- the percentage of glycidyl ether ranges from 5% to 60%;
- the percentage of biodegradable elastomeric copolyester ranges from 5% to 40%,

wherein the percentages are by weight on the total weight of the copolymer.

2. The copolymer according to claim 1 wherein the percentage of polylactic acid ranges from 70% to 80%, the percentage of aliphatic or cycloaliphatic glycidyl ether ranges from 5 to 15%, and the percentage of biodegradable elastomeric copolyester ranges from 10% to 20%, by weight on the total weight of the copolymer.

3. The copolymer according to claim 2 wherein the percentage of polylactic acid is substantially 75%, the percentage of aliphatic or cycloaliphatic glycidyl ether is substantially 10%, and the percentage of biodegradable elastomeric copolyester is substantially 15%, by weight on the total weight of the copolymer.

4. The copolymer according to any one of claims 1-3 wherein the polylactic acid has an average molecular weight (Mw) ranging from 15,000 to 1,000,000.

5. The copolymer according to claim 4 wherein the polylactic acid has an average molecular weight (Mw) ranging from 100,000 to 350,000.

6. The copolymer according to claim 5 wherein the polylactic acid has an average molecular weight (Mw) ranging from 150,000 to 250,000.

7. The copolymer according to any one of claims 1 to 6 wherein the glycidyl ether consists of m monomeric units wherein m is an integer from 20 to 300.

8. The copolymer according to any one of claims 1 to 7 wherein the glycidyl ether is preferably selected from the group consisting of glycerol polyglycidyl ether, polypropylene glycol diglycidyl ether, trimethylolpropane triglycidyl ether, sorbitol polyglycidyl ether, polyglycerol polyglycidyl ether, pentaerythritol polyglycidyl ether, diglycerol polyglycidyl ether, trimethylolpropane polyglycidyl ether, polyethylene glycol diglycidyl ether, resorcinol diglycidyl ether, p-hydroxy benzoic acid glycidyl ether, neopentyl glycol diglycidyl ether, 1,6-hexanediol diglycidyl ether, bisphenol A diglycidyl ether, hydroquinone diglycidyl ether, bisphenol S diglycidyl ether, 1,4-butanediol diglycidyl ether, o-cresyl glycidyl ether, poliglycerol-3-glycidyl ether, 1,4-cyclohexanedimethanol diglycidyl ether, 2-ethyl-hexyl-glycidyl ether, 1,6-hexanediol diglycidyl ether, glycidyl ether of a mixture of C11-C15 alcohols (C12-C14-glycidyl ether), polyoxypropylene glycol diglycidyl ether, poly(tetramethyleneoxide) diglycidyl ether, hydrogenated bisphenol A diglycidyl ether, ethylene glycol diglycidyl ether, diethylene glycol diglycidyl ether, polyethylene glycol diglycidyl ether, propylene glycol diglycidyl ether, polybutadiene diglycidyl ether, diglycidyl o-phthalate, allyl glycidyl ether, phenyl glycidyl ether, lauryl alcohol ethylene oxide (n=15) glycidyl ether, dibromo phenyl glycidyl ether, isosorbide diglycidyl ether, glycerol propoxylate triglycidyl ether, epoxy soybean oil (ESO), epoxy linseed oil (ELO), hydrogenated bisphenol A diglycidyl ether and its oligomers, or mixtures thereof.

9. The copolymer according to any one of claims 1-8 wherein the biodegradable elastomeric copolyester is selected from the group consisting of polybutylene-*co*-adipate-*co*-terephthalate, polybutylene succinate or polybutylene-*co*-adipate-*co*-succinate.

10. A process for the manufacture of a block copolymer wherein the blocks consist of:

A) polylactic acid (PLA);
B) aliphatic or cycloaliphatic glycidyl ether (GE);
C) biodegradable elastomeric copolyester;

comprising the reactive blending of a mixture of:

- 40% to 90% of polylactic acid (PLA);
- 5% and 60% of aliphatic glycidyl ether (GE);
- 5% to 40% of biodegradable elastomeric copolyester.

11. The process according to claim 10 wherein the reactive blending is performed at a temperature of at least 180°C for a time of less than 5 minutes.

12. The process according to claim 10 wherein the reactive blending is performed in the presence of a transesterification catalyst at a temperature of at least 160°C.

13. The process according to claim 12 wherein the transesterification catalyst is tetrabutylammonium tetraphenylborate (TBATPB), titanium tetrabutoxide $Ti(OBu)_4$, dibutyl tin dilaurate $Sn(Bu)_2(Lau)_2$, antimony oxide $Sb_2O_3$ or tin chloride dihydrate $(SnCl_2 \cdot 2H_2O)$.

14. The process according to any one of claims 10-13 wherein the reaction mixture further contains one or more additives necessary for blown film extrusion.

15. The process according to claim 14 wherein the additive is a slip agent, an antistatic agent and/or an antiblock agent.

16. A block copolymer obtained by the process according to any one of claims 10-15.

17. A product comprising a copolymer according to any one of claims 1-9 and 16.

18. A product according to claim 17, selected from the group consisting of packaging film, bags, sachets and shoppers.


**Patentansprüche**

1. Blockcopolymer, wobei die Blöcke aus:

    A) Polymilchsäure (PLA);
    B) aliphatischem oder cycloaliphatischem Glycidylether (GE);
    C) biologisch abbaubarem elastomerem Copolyester bestehen;

wobei:

    - der Prozentgehalt an Polymilchsäure von 40% bis 90% reicht;
    - der Prozentgehalt an Glycidylether von 5% bis 60% reicht;
    - der Prozentgehalt an biologisch abbaubarem elastomerem Copolyester von 5% bis 40% reicht,

wobei die Prozentgehalte nach Gewicht, bezogen auf das Gesamtgewicht des Copolymers, sind.

2. Copolymer gemäß Anspruch 1, wobei der Prozentgehalt an Polymilchsäure von 70% bis 80% reicht, der Prozentgehalt an aliphatischem oder cycloaliphatischem Glycidylether von 5% bis 15% reicht und der Prozentgehalt an biologisch abbaubarem elastomerem Copolyester von 10% bis 20% reicht, nach Gewicht, bezogen auf das Gesamtgewicht des Copolymers.

3. Copolymer gemäß Anspruch 2, wobei der Prozentgehalt an Polymilchsäure im Wesentlichen 75% ist, der Prozentgehalt an aliphatischem oder cycloaliphatischem Glycidylether im Wesentlichen 10% ist und der Prozentgehalt an biologisch abbaubarem elastomerem Copolyester im Wesentlichen 15% ist, nach Gewicht, bezogen auf das Gesamtgewicht des Copolymers.

4. Copolymer gemäß einem der Ansprüche 1-3, wobei die Polymilchsäure ein durchschnittliches Molekulargewicht (MG) im Bereich von 15.000 bis 1.000.000 hat.

5. Copolymer gemäß Anspruch 4, wobei die Polymilchsäure ein durchschnittliches Molekulargewicht (MG) im Bereich von 100.000 bis 350.000 hat.

6. Copolymer gemäß Anspruch 5, wobei die Polymilchsäure ein durchschnittliches Molekulargewicht (MG) im Bereich von 150.000 bis 250.000 hat.

7. Copolymer gemäß einem der Ansprüche 1 bis 6, wobei der Glycidylether aus m Monomereinheiten besteht, wobei m eine ganze Zahl von 20 bis 300 ist.

8. Copolymer gemäß einem der Ansprüche 1 bis 7, wobei der Glycidylether vorzugsweise aus der Gruppe, bestehend aus Glycerinpolyglycidylether, Polypropylenglycoldiglycidylether, Trimethylolpropantriglycidylether, Sorbitpolyglycidylether, Polyglycerinpolyglycidylether, Pentaerythritpolyglycidylether, Diglycerinpolyglycidylether, Trimethylolpropanpolyglycidylether, Polyethylenglycoldiglycidylether, Resorcindiglycidylether, p-Hydroxybenzoesäureglycidylether, Neopentylglycoldiglycidylether, 1,6-Hexandioldiglycidylether, BisphenolA-diglycidylether, Hydrochinondiglycidylether, Bisphenol-Sdiglycidylether, 1,4-Butandioldiglycidylether, o-Kresylglycidylether, Poliglycerin-3-glycidylether, 1,4-Cyclohexandimethanoldiglycidylether, 2-Ethyl-hexyl-glycidylether, 1,6Hexandioldiglycidylether, Glycidylether eines Gemisches von C11-C15-Alkoholen (C12-C14-Glycidylether), Polyoxypropylenglycoldiglycidylether, Poly(tetramethylenoxid)diglycidylether, hydriertem Bisphenol-A-diglycidylether, Ethylenglycoldiglycidylether, Diethylenglycoldiglycidylether, Polyethylenglycoldiglycidylether, Propylenglycoldiglycidylether, Polybutadiendiglycidylether, Diglycidyl-o-phthalat, Allylglycidylether, Phenylglycidylether, Laurylalkoholethylenoxid (n=15)-glycidylether, Dibromphenylglycidylether, Isosorbiddiglycidylether, Glycerinpropoxylattriglycidylether, Epoxysojabohnenöl (ESO), Epoxyleinsamenöl (ELO), hydriertem Bisphenol-A-diglycidylether und seinen Oligomeren oder Gemischen davon, ausgewählt ist.

9. Copolymer gemäß einem der Ansprüche 1-8, wobei der biologisch abbaubare elastomere Copolyester aus der Gruppe, bestehend aus Polybutylen-co-Adipat-co-Terephthalat, Polybutylensuccinat oder Polybutylen-co-Adipat-co-Succinat, ausgewählt ist.

10. Verfahren zur Herstellung eines Blockcopolymers, wobei die Blöcke aus:

   A) Polymilchsäure (PLA);
   B) aliphatischem oder cycloaliphatischem Glycidylether (GE);
   C) biologisch abbaubarem elastomerem Copolyester bestehen;

   welches das reaktive Mischen eines Gemisches aus:

   - 40% bis 90% Polymilchsäure (PLA);
   - 5% bis 60% aliphatischem Glycidylether (GE);
   - 5% bis 40% biologisch abbaubarem elastomerem Copolyester umfasst.

11. Verfahren gemäß Anspruch 10, wobei das reaktive Mischen bei einer Temperatur von wenigstens 180°C für eine Zeit von weniger als 5 Minuten durchgeführt wird.

12. Verfahren gemäß Anspruch 10, wobei das reaktive Mischen in Gegenwart eines Umesterungskatalysators bei einer Temperatur von wenigstens 160°C durchgeführt wird.

13. Verfahren gemäß Anspruch 12, wobei der Umesterungskatalysator Tetrabutylammoniumtetraphenylborat (TBAT-PB), Titantetrabutoxid $Ti(OBu)_4$, Dibutylzinndilaurat $Sn(Bu)_2(Lau)_2$, Antimonoxid $Sb_2O_3$ oder Zinnchlorid-Dihydrat $(SnCl_2 \cdot 2H_2O)$ ist.

14. Verfahren gemäß einem der Ansprüche 10-13, wobei das Reaktionsgemisch außerdem ein oder mehrere Additiv(e) enthält, die zur Blasfilmextrusion notwendig sind.

15. Verfahren gemäß Anspruch 14, wobei das Additiv ein Gleitmittel, ein Antistatikum und/oder ein Antiblockiermittel ist.

16. Blockcopolymer, das durch das Verfahren gemäß einem der Ansprüche 10-15 erhalten wurde.

17. Produkt, umfassend ein Copolymer gemäß einem der Ansprüche 1-9 und 16.

18. Produkt gemäß Anspruch 17, ausgewählt aus der Gruppe, bestehend aus Verpackungsfilm, Taschen, Beuteln und Shoppern.

**Revendications**

1. Copolymère séquencé dans lequel les séquences sont constituées par :

   A) de l'acide polylactique (PLA) ;
   B) de l'éther glycidylique (GE) aliphatique ou cycloaliphatique ;
   C) un copolyester élastomère biodégradable ;

   dans lequel

   - le pourcentage de l'acide polylactique se situe dans la plage de 40 % à 90 % ;
   - le pourcentage de l'éther glycidylique se situe dans la plage de 5 % à 60 % ;
   - le pourcentage du copolyester élastomère biodégradable se situe dans la plage de 5 % à 40 % ;

   les pourcentages représentant des pourcentages en poids par rapport au poids total du copolymère.

2. Copolymère selon la revendication 1, dans lequel le pourcentage de l'acide polylactique se situe dans la plage de 70 % à 80 %, le pourcentage de l'éther glycidylique aliphatique ou cycloaliphatique se situe dans la plage de 5 à 15 %, et le pourcentage du copolyester élastomère biodégradable se situe dans la plage de 10 % à 20 % en poids par rapport au poids total du copolymère.

3. Copolymère selon la revendication 2, dans lequel le pourcentage de l'acide polylactique s'élève essentiellement à 75 %, le pourcentage de l'éther glycidylique aliphatique ou cycloaliphatique s'élève essentiellement à 10 %, et le pourcentage du copolyester élastomère biodégradable s'élève essentiellement à 15 %, en poids par rapport au poids total du copolymère.

4. Copolymère selon l'une quelconque des revendications 1 à 3, dans lequel l'acide polylactique possède un poids moléculaire moyen (Mw) qui se situe dans la plage de 15.000 à 1.000.000.

5. Copolymère selon la revendication 4, dans lequel l'acide polylactique possède un poids moléculaire moyen (Mw) qui se situe dans la plage de 100.000 à 350.000.

6. Copolymère selon la revendication 5, dans lequel l'acide polylactique possède un poids moléculaire moyen (Mw) qui se situe dans la plage de 150.000 à 250.000.

7. Copolymère selon l'une quelconque des revendications 1 à 6, dans lequel l'éther glycidylique est constitué par m unités monomères, m représentant un nombre entier de 20 à 300.

8. Copolymère selon l'une quelconque des revendications 1 à 7, dans lequel l'éther glycidylique est choisi de préférence parmi le groupe constitué par l'éther polyglycidylique de glycérol, l'éther diglycidylique de polypropylène glycol, l'éther triglycidylique de triméthylolpropane, l'éther polyglycidylique de sorbitol, l'éther polyglycidylique de polyglycérol, l'éther polyglycidylique de pentaérythritol, l'éther polyglycidylique de diglycérol, l'éther polyglycidylique de triméthylolpropane, l'éther diglycidylique de polyéthylène glycol, l'éther diglycidylique de résorcinol, l'éther glycidylique de l'acide p-hydroxybenzoïque, l'éther glycidylique de néopentyl glycol, l'éther diglycidylique de 1,6-hexanediol, l'éther diglycidylique de bisphénol A, l'éther diglycidylique d'hydroquinone, l'éther diglycidylique de bisphénol S, l'éther diglycidylique de 1,4-butanediol, l'éther o-crésyl glycidylique, l'éther 3-glycidylique de polyglycérol, l'éther diglycidylique de 1,4-cyclohexane diméthanol, l'éther 2-éthyl-hexyl-glycidylique, l'éther diglycidylique de 1,6-hexanediol, un éther glycidylique d'un mélange d'alcools en $C_{11}$-$C_{15}$ (éthers glycidyliques en $C_{12}$-$C_{14}$), l'éther diglycidylique de polyoxypropylène glycol, l'éther diglycidylique de poly(oxyde de tétraméthylène), l'éther diglycidylique de bisphénol A hydrogéné, l'éther diglycidylique d'éthylène glycol, l'éther diglycidylique de diéthylène glycol, l'éther diglycidylique de polyéthylène glycol, l'éther diglycidylique de propylène glycol, l'éther diglycidylique de polybutadiène, le o-phtalate de diglycidyle, l'éther allylglycidylique, l'éther phénylglycidylique, l'éther glycidylique d'oxyde d'éthylène de l'alcool laurylique (n = 15), l'éther dibromophénylglycidylique, l'éther diglycidylique d'isosorbide, l'éther triglycidylique de propoxylate de glycérol, l'huile de soja époxydée (ESO), l'huile de lin époxydée (ELO), l'éther diglycidylique de bisphénol A hydrogéné et ses oligomères, ou leurs mélanges.

9. Copolymère selon l'une quelconque des revendications 1 à 8, dans lequel le copolyester élastomère biodégradable est choisi parmi le groupe constitué par un copolymère de polybutylène-adipate-téréphtalate, le succinates de polybutylène ou un copolymère de polybutylène-adipate-succinate.

10. Procédé pour la préparation d'un copolymère séquencé dans lequel les séquences sont constituées par :

        A) de l'acide polylactique (PLA) ;
        B) de l'éther glycidylique (GE) aliphatique ou cycloaliphatique ;
        C) un copolyester élastomère biodégradable ;

comprenant le fait de soumettre à un mélange réactif intime un mélange :

        - de 40 % à 90 % d'acide polylactique (PLA) ;
        - de 5 % à 60 % d'éther glycidylique aliphatique (GE) ;
        - de 5 % à 40 % d'un copolyester élastomère biodégradable.

11. Procédé selon la revendication 10, dans lequel le mélange réactif intime est mis en oeuvre à une température d'au moins 180 °C pendant un laps de temps inférieur à 5 minutes.

12. Procédé selon la revendication 10, dans lequel le mélange réactif intime est mis en oeuvre en présence d'un catalyseur de transestérification à une température d'au moins 160 °C.

13. Procédé selon la revendication 12, dans lequel le catalyseur de transestérification est le tétraphénylborate de tétrabutylammonium (TBATPB), le tétrabutoxyde de titane $Ti(OBu)_4$, le dilaurate de dibutylétain $Sn(Bu)_2(Lau)_2$, l'oxyde d'antimoine $Sb_2O_3$ ou le dihydrate de chlorure d'étain ($SnCl_2 \cdot 2H_2O$).

14. Procédé selon l'une quelconque des revendications 10 à 13, dans lequel le mélange réactionnel contient en outre un ou plusieurs additifs nécessaires pour une extrusion de film soufflé.

15. Procédé selon la revendication 14, dans lequel l'additif est un agent de glissement, un agent antistatique et/ou un agent s'opposant à l'adhérence de contact entre feuilles.

16. Copolymère séquencé que l'on obtient via le procédé selon l'une quelconque des revendications 10 à 15.

17. Produit comprenant un copolymère selon l'une quelconque des revendications 1 à 9 et 16.

18. Produit selon la revendication 17, choisi parmi le groupe constitué par un film d'emballage, des sacs, des sachets et des sacs à provisions.

FIG. 1

**FIG. 2**

**FIG. 3**

**FIG. 4**

FIG. 5

FIG. 6

**FIG. 7**

**FIG. 8**

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5883199 A
- US 5359026 A
- US 2009253871 A
- US 2005136259 A
- WO 2011128064 A1
- WO 2006074815 A1
- US 124574 A

**Non-patent literature cited in the description**

- **HONGZHI L. et al.** Journal of Polymer Science. *Polymer Physics,* 2011, vol. 49, 1051-1083
- **BROSTRÖM J. et al.** *Biomacromolecules,* 2004, vol. 5, 1124-34
- **K. PREMPHET et al.** *Polymer Engineering and Science,* 2001, vol. 41, 1978-1986
- **LAZZERI A. et al.** *Macromolecular Symposia,* 2011, vol. 301, 82-89
- **COLTELLI M.B.** *Polymer Degradation and Stability,* 2011, vol. 96, 982-990
- **HASSOUNA F. et al.** *European Polymer Journal,* 2011, vol. 47, 2134-2144
- **HASSOUNA F. et al.** *European Polymer Journal,* 2012, vol. 48, 404-415
- **SONG X.** MSc thesis. University of Massachusetts Lowell, 1997
- **MCCARTHY S. et al.** *Annu. Tech. Conf. - Soc. Plast. Eng.,* 2001, vol. 3, 2546-2549
- **SONG X. et al.** *Journal of Applied Medical Polymers,* 2002, vol. 6 (2), 64-69
- **ALI, F. et al.** *Polym. Bull.,* 2008, vol. 62, 91-98
- **MENG B. et al.** *European Polymer Journal,* 2012, vol. 48, 127-135
- *CHEMICAL ABSTRACTS,* 25038-04-4
- **DE VETTER L. ; DEPRAETERE G. ; JANSSEN C. ; STEVENS C. ; VAN ACKER J.** *Ann. For. Sci.,* 2008, vol. 65 (504), 1-10